# EUROPEAN PATENT APPLICATION

(11) **EP 3 185 566 A1**
(43) Date of publication of application: **28.06.2017**
(21) Application number: 15307107.1
(22) Date of filing: 22.12.2015
(51) Int. Cl.: H04N 21/262, H04N 21/2187, H04N 21/482, H04N 21/442, H04N 21/472, H04N 21/47, H04N 21/45

(54) **METHOD FOR PLAYING BACK A PLURALITY OF MEDIA TITLES, ADAPTED MEDIA SOURCE DEVICE, MEDIA PLAYER DEVICE, MEDIA DELEGATION DEVICE AND CONFIGURABLE AND ADAPTED COMPUTER PROGRAM**

(71) Applicant: Thomson Licensing, 92130 Issy-les-Moulineaux (FR)
(72) Inventor: Weber, Michael, 30559 Hannover (DE); Glaeser, Frank, 30449 Hannover (DE); Jachalsky, Joern, 30974 Wennigsen (DE)
(74) Representative: Huchet, Anne

(57) **Abstract**

If multiple persons are together and want to jointly consume media, i.e. there is a single presentation of a media title and all persons are jointly watching and/or listening, then there is a problem that the media titles which shall be presented are distributed among a plurality of media devices (10, 20,..., 70) cloud storages (100, 200, 300) or streaming services. To solve such problem there is the idea to assign the media player functionality to one media device (10, 70) which is responsible for the media playback/presentation. This device can receive presentation requests from other media devices which are configured to be media source devices (20, 30) in the joint media consumption session. If a presentation request is accepted by the media player device (10, 70), the suggested title will be added to a common playlist. The title will be streamed from the media source device (20, 30) to the media player device (10, 70) during playback.

## Description

The disclosure relates to a method for playing back a plurality of media titles. The disclosure also concerns an adapted media source device, adapted media player device, and an adapted media delegation device. The disclosure further concerns a configurable computer program which depending on how it is configured is comprising computer-executable instructions that when run in a computer system cause the computer system to perform the method steps of a media source device, media player device or media delegation device in the method for playing back a plurality of media titles.

### Background

The use of mobile phones, in particular modern smart phones is becoming more and more extensive. To carry media titles like songs, videos, photo pictures and text documents like epaper and ebooks in the smart phones memory is important for the customers such that these sort of applications are prominent features and well supported on smart phones. Today, the media titles are not only accessible in the smart phones storage means but also it is supported that the media titles are stored somewhere in the cloud and they are made accessible via the smart phone. Likewise, media titles may be made accessible with the help of streaming services, like Napster, Spotify, Deezer, Apple Music or Google Play Music. For that purpose the smart phone is equipped with a plurality of communication protocols such as TCP/IP, HTTP, UDP, RTP, RTSP, RTMP, RTCP, which are widely used in Internet technology.

When consuming media, access to the media content is required. Thereby, the media content of one user can be stored in various locations (local devices, cloud storage, streaming services). If multiple persons are together and want to jointly consume media in situations like during a party, when travelling in a car, or train etc., the media content is often distributed over multiple devices, i.e. a number of titles is stored on a first person's multimedia player, a plurality of titles is stored on a second person's player device and another title on a third person's player. Therefore, it is necessary to either switch devices for the media presentation/playback or to copy the media content before presenting/playback.

A large overview of techniques available for streaming media files in local networks or in Internet can also be found on Kompendium: **http://kompendium.infotip.de/streaming-media.html!**

### Summary

It is an object of the invention to provide the technical means which allow the group of persons to jointly consume media titles which are spread over at least two or several of the persons in the group more or less seamlessly under control of a playlist maintained on a single media player device. I.e. there is no need to copy/collect all media titles which the group wants to consume to/in a single playback device before starting playback according to the playlist. This and other objects are solved with a method for playing back a plurality of media titles according to claim 1, an adapted media source device in accordance with claim 9, an adapted media player device in accordance to claim 10, an adapted media delegation device according to claim 11 and a configurable and adapted computer program according to claim 12.

With the proposed invention a group of persons can jointly consume media content that is distributed/stored on the devices of persons in the group without switching the devices or copying the media content. The invention describes a way, in which multiple users can present, playback and mix their media (pictures, music, videos, text,...) without the need to physically switch devices or copy media prior to the consumption on one device. The idea is to have one device, which is responsible for the media playback. This device can receive requests for media presentation/playback from other media source devices.

The dependent claims contain advantageous developments and improvements to the method and devices according to the disclosure.

A media player device (e.g. a smart phone) is selected and then paired with a media presentation device (e.g. a home/car entertainment system). This pairing can be done wirelessly, via USB or audio/video cable. The media player device has the central connection to the media presentation device. The media player device has all common functions required to control the presentation (e.g. full playback control for audio, video, pictures, and documents). For the joint media consumption the other persons in the group then need a media source device.

In the method according to the disclosure a presentation request is sent to the media player device from a media source device specifying a media title which is located on the media source device or located on a server which can be accessed by the media source device via a communication network. The media player device adds the media title specified in the presentation request to the playlist of the media player device. Thus a common playlist for the joint media consumption is maintained on the media player device.

The presentation request contains the URL information (uniform resource locator) for the media title identified in the presentation request. Such URL information is standardized such that all the different types of handheld devices will understand this information.

For media titles which are located remote from the media source device on a server, it is advantageous that the media source device upon receiving a presentation request grant message back from the media player device, starts downloading the file of the media title that has been added to the playlist from the server. Since downloading of media titles normally takes a while, this has the advantage that the media title will be available in the local memory of the media source device at the time of playback of the title according to the common playlist.

For the joint media consumption then it is advantageous that for playback of the media title that has been added to the playlist on the media player device, the media player device sends an access request to the media source device, where in response to the access request the media source device starts streaming of the requested media title to the media player device. Thus there is no need to copy all the media titles to the media player device maintaining the common playlist beforehand.

The access request preferably corresponds to an HTTP Get request identifying the file name and location of the media title based on the URL information of the media title to which access is requested. The HTTP protocol is widely supported in electronic devices.

Likewise, it is advantageous that the media source device performs streaming of the media title to the media player device with a streaming protocol. Such streaming protocol needs to be supported in both devices media source device and media player device. Widely supported streaming protocols are one of HTTP streaming, RTP streaming or HTTP chunked transfer encoding.

For the case that the media player device is also used for presenting the media title, with the built-in or connected presentation means (loudspeaker, display), for playback the media player device decodes the media file which is located on the media player device and presents the decoded content with its own or connected presentation means.

For the case that the media player device is paired with an external media presentation device, for playback the media player device decodes the segments of the media file received during streaming of the media title and forwards the decoded content to the media presentation device for presentation. This forwarding operation may also be in the form of a media streaming operation with a streaming protocol.

In some scenarios like where the driver of a car is the owner of a smart phone which is paired with the car entertainment system, there is a need to delegate the control of the media presentation/playback for the joint media consumption. Here, it is advantageous to configure a media device of another person as a media delegation device. The delegation device will be used to control the media player device. Therefore, the control is delegated from the media player device to the media delegation device. This includes the control over the presentation requests, the playlist and the playback. The delegation of the control from the media player device to the delegation device is transparent to the media source devices.

It is further advantageous that the media player device when receiving a presentation request from a media source device forwards the presentation request to the media delegation device and the media delegation device processes the presentation request and upon acceptance of the presentation request sends a playlist updating message to the media player device. The media player device in response to the receipt of the media update message adds the media title to the playlist maintained in the media player device.

### Drawings

Exemplary embodiments of the present disclosure are shown in the drawings and are explained in greater detail in the following description.

In the drawings:
- Fig. 1: shows a first example of a joint media consumption setup;
- Fig. 2: shows a second example of a joint media consumption setup including a delegation device;
- Fig. 3: shows a block diagram of a combined media player and media presentation device;
- Fig. 4: illustrates a third example of a joint media consumption setup in which the combined media player and media presentation device is used;
- Fig. 5a: shows an example of a graphical user interface for a media source device;
- Fig. 5b: shows an example of a graphical user interface for a combined media presentation-playback- and source device in the mode with delegation control function being disabled;
- Fig. 5c: shows an example of a graphical user interface for a combined media presentation-playback- and source device in the mode with delegation control function being enabled;
- Fig. 5d: shows an example of a graphical user interface for a media delegation device;
- Fig. 5e: shows an example of a graphical user interface for a combined media delegation and source device;
- Fig. 6: shows a block diagram of a smart phone according to the disclosure;
- Fig. 7: shows a flowchart of a software program for configuring a media device;
- Fig. 8: shows a flowchart of a software program which is executed by a media device which is configured in the media source device mode;
- Fig. 9: shows a flowchart of a 1^{st} software program which is executed by a media device which is configured as a media player device or by a media device which is configured as a combined media player and media presentation device;
- Fig. 10: shows a flowchart of a 2^{nd} software program which is executed by a media device which is configured as a media player device;
- Fig. 11: shows a flowchart of a 3^{rd} software program which is executed which is configured as a combined media player and media presentation device;
- Fig. 12: shows a flowchart of a 4^{th} software program which is executed by a media device which is configured as a delegation device; and
- Fig. 13: shows a flowchart of a 5^{th} software program which is executed by a media device which is configured as a media player device.

### Exemplary embodiments

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Thus, for example, it will be appreciated by those skilled in the art that the block diagram presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

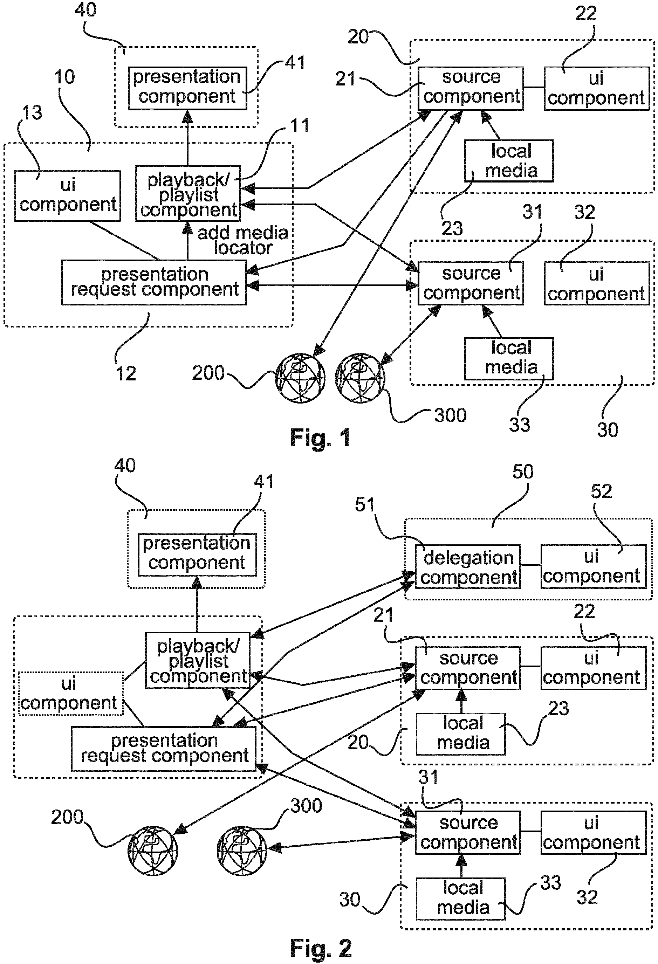

**Fig. 1** shows an embodiment of the invention in which the joint media consumption takes place in a car during a journey of a group of people, e.g. a family with the car. It is assumed that three persons have smart phones 10, 20, 30. It is further assumed that the driver or the person next to the driver has a smart phone 10 which is paired with the car entertainment system 40. The pairing process being in the usual form of the Bluetooth communication system. As an alternative it can be connected to the car entertainment system with WLAN interface, USB cable, HDMI cable another AV cable or a pure audio cable (e.g. RCA cable or headphone cable). At the same time the smart phone 10 of the person sets up a WLAN local area network to which the other smart phones 20, 30 connect in the usual form with SSID and password. The WLAN network in this case will be set up in ad hoc mode with no device being an access point. The set-up process can be manually made.

In an alternative embodiment the WLAN network will be set up in infrastructure mode with the car entertainment system being the access point to which all smart phones 10, 20, 30 connect. For this it is required that the car entertainment system 40 is equipped with a WLAN interface (not shown).

For finding the services in the stations in the network, a discovery service (not shown) is preferably implemented in the stations. This could preferably be done in the form of the so-called REST service. Examples of such discovery services are DNS-SD (apple Bonjour), SSDP as part of the UpnP system, and AllJoyn via the AllSeen alliance. All these solutions provide service advertisement and discovery abstraction. For further information about service discovery it is expressively referred to the Wikipedia entry about zero configuration and service discovery under the link:
https://en.wikipedia.org/wiki/Zero-configuration_networking#Service_discovery

An example of a joint media consumption in the car is the listening to music titles. The owners of the smart phones normally have their music titles stored on the smart phone. If the passengers will jointly consume music by presentation via the loudspeakers of the car entertainment system, they may have the wish to listen to their favourite music titles in the order of a playlist located on the preselected smart phone 10. In a first example it is assumed that the smart phone 10 owner does not have music titles stored on his smart phone. For the joint music consumption, there is a need to add music titles to the playlist maintained on smart phone 10. This playlist hereinafter will be called a common playlist.

For this purpose the smart phones 20 and 30 are equipped with a presentation request building capability. This capability allows to build and transmit a presentation request for each music title that the smart phone owner wishes to add to the common music playlist located on smart phone 10. The presentation request comprises the music title and an URL information at minimum. If a plurality of titles shall be added to the playlist, the presentation request comprises a list of all the selected music titles and corresponding URL information. An example of such a presentation request is presented below:

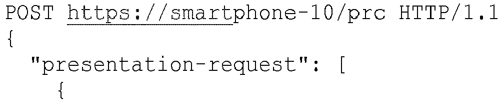

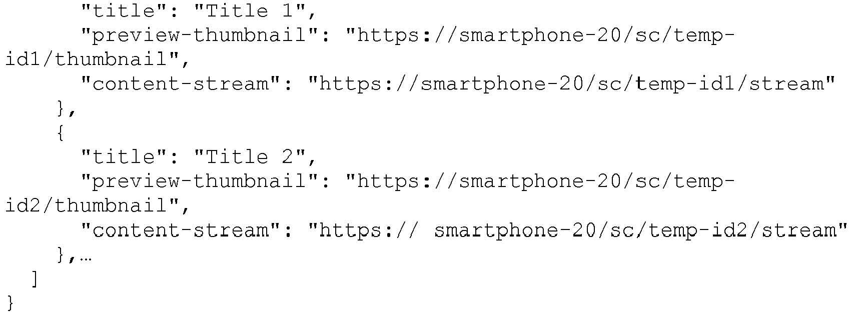

The presentation request is sent with HTTP protocol and has the format of a HTTP Post request. In the above given example it is a presentation request for two titles. In this example two URLs are listed for each title, one for a preview-thumbnail and the other for the corresponding audio stream. The path information in the URL consists of station name, e.g. smartphone-20, source component, e.g. sc and an identifier which is an encrypted path information, e.g. temp-id1. The encryption of this path information is important to restrict access to the other smart phone 20 folders since smart phone 10 won't get the information about the smart phone 20 folder in the clear. So it can't access other folders without getting the correponding temp-id. The selected music titles located on smart phone 20 and 30 will thus be added to the common playlist maintained on smart phone 10. The UI component 13 of smart phone 10 is adapted to display presentation requests from other passengers. The owner of smart phone 10 then has the opportunity to accept the presentation request manually by clicking on an OK button which is displayed in the user menu for showing presentation requests.

A presentation request from a media source device (20, 30) contains one or more presentation request items. A presentation request item contains a temporary media stream location (e.g. URL), which can be added to the playlist of the media player device (10, 70) and/or is used to stream the media. A presentation request item can also contain a visual representation (e.g. a thumbnail) and other metadata describing the media title. If a presentation request contains more than one presentation request item the user of the media player device (10, 70) can choose which presentation request items to accept.

The selected music titles added to the playlist remain stored on the smart phone 20 and 30 from where the presentation request has been sent. None of the selected titles from smart phone 20 and 30 will be downloaded to smart phone 10 beforehand. The title located remote from the smart phone 10 will be accessed when the title is to be played back according to the playlist. At that moment the smart phone 10 generates an HTTP Get request with the help of the URL information of that title from the playlist. An example of such a download request is depicted below:
**Get thumbnail:** GET https://smartphone-20/sc/temp-idl/thumbnail HTTP/1.1
**Get stream:** GET https://smartphone20/sc/temp-id1/stream HTTP/1.1

The download request is sent with HTTP protocol and has the format of a HTTP Get request. Since playback of the title shall begin without substantial delay, it is preferred that HTTP streaming is used for transferring the music title to the smart phone 10 paired with the car entertainment system 40. More in particular, in the HTTP streaming technique, the web server on smart phone 20 or 30 will organize the data of the music file which is to be played back in a plurality of smaller sized files, e.g. each having a playback length of 10s. The web server will create an index file which corresponds to an extended playlist containing the metadata for the smaller sized files providing the different chunks of the music title. Such prepared file segments will be transferred to smart phone 10 in a plurality of HTTP responses to corresponding HTTP Get requests which are generated after the index file has been downloaded to smart phone 10. So, in each of the plurality of responses a file is downloaded like in normal HTTP Get request responses which has the distinct advantage that since its requests use only standard HTTP transactions, HTTP Streaming is capable of traversing a firewall or proxy server that lets through standard HTTP traffic, unlike UDP-based streaming protocols such as RTP. This also allows content to be offered from conventional HTTP servers as origin and delivered over widely available HTTP-based content delivery networks. There is an Internet Draft existing written by Apple Inc. which specifies the technique of HTTP streaming. It is expressively referred to the Internet Draft about HTTP streaming for the purpose of the disclosure of the invention, in this regard.

There is a source component 21 and 31 in the smart phones 20 and 30 which provide the web server (not shown) on which the selected music titles will be made accessible with HTTP streaming. The music titles will be stored in the local storage component, typically a solid state memory in the form of FEPROM or CMOS-RAM, SD card or micro SD card. Other possible forms of storage components correspond to HDD, SDD, DVD or the like.

The smart phone 10 receives the music file pieces, and collects them for playback. During playback the music title will be decoded with the corresponding decoder which is a built-in component of the smart phone 10, such mp3 or AAC decoder for audio decoding. The decoder is part of the playback/playlist component 11 in smart phone 10. Playback will start as soon as enough data for filling the decoder buffer is available, so there is no need to wait until the whole file is transferred. The decoded (uncompressed) audio data will be output to the car entertainment system 40 for presentation. The car entertainment system performs postprocessing with the data for sound generation like equalizing, surround sound mixing, loudness, level adjustment, and finally DA conversion and amplification for the presentation with the loudspeakers built-in in the car. This data is transported to the car entertainment system via the cable connection with the smart phone 10 (USB, HDMI, RCA etc.) or via the wireless Bluetooth connection as explained above.

Today, it is also common, that some of the owners music titles are not stored in the smart phone, but in the "cloud", i.e. somewhere on a cloud storage device of a cloud storage provider, e.g. Dropbox. To retrieve also the music titles from the "cloud" for presentation in the car, there is a need for further adaptation of the smart phones 20 and 30. The cloud storage of the user of smart phone 20 is labelled with reference number 200. The cloud storage of the user of smart phone 30 is labelled with reference number 300.

After the owner of the smart phone 20 selects a music title stored on the cloud storage 200 for adding to the common playlist, the source component 21 in smart phone 20 will generate an HTTP Get request which will be sent to the cloud storage 200. The music title will be downloaded immediately from the cloud storage 200 and a local copy will be stored on the web server of source component 21. The HTTP Get request for downloading the file from the cloud storage 200 will be sent over the telephone network to the cloud storage provider. Examples of a suitable telephone network technology are the LTE (4G) or UMTS (3G) mobile phone communication standards. Also the requested file will be transferred to the smart phone 20 via the telephone network.

The source component 21 also will generate and send either before the download process or after the download process a presentation request for the music title from the cloud, for adding it to the common playlist. The source component 21 when sending the presentation request for the selected music title to smart phone 10, will insert the URL information for its local web server as part of the source component 21.

Next, it is considered a situation where it is time to playback a title that was added to the common playlist by smart phone 20. At the time of playback of this music title, the playback/playlist component 41 in smart phone 10 will generate a HTTP Get request which goes to the web server on smart phone 20. The source component 21 will then access the music title and send it over to smart phone 10 with HTTP streaming in the same way as for a locally stored music title, see above.

**Fig. 2** shows another embodiment of the invention. Like reference numbers denote the like components as described in connection with Fig. 1 and will not be described again in order to avoid repetition. It is possible to delegate the control of the media presentation/playback functionality to a separate device. This may be useful in the scenario of joint media consumption in a car. Normally, the driver has control over the car entertainment system 40 and will pair his smart phone 10 with the car entertainment system 40. However, during the journey, he cannot operate the smart phone 10 while he is driving the car because of the risk of distraction. So if the other passengers would like to add media titles to the common playlist recorded on the driver's smart phone 10, it is not possible that the driver accepts presentation requests, manually.

To solve this problem it is proposed to introduce a delegation device 50 that can be used to control the media player device 10 if the control was delegated. Therefore, the control is delegated from the media player device 10 to the media delegation device 50. This includes the control over the presentation requests, the playlist and the playback. Note, that the common playlist will remain stored on the smart phone 10. The delegation of the control from the media player device 10 to the delegation device 50 is transparent to the media source devices 20, 30.

The media player device 10, the delegation device 50 and the media source devices 20, 30 each have a user interface component (graphical, speech, ...). With the user interface component 22 and 32 of the media source device 20, 30 the user can select media content stored on the local media storage 23, 33 or in the associated cloud storage 200, 300 to be presented and send media presentation requests for this selected content to the media player device 10. With the user interface component 13, 52 of the media player device 10 or the delegation device 50 a user can accept the media presentation requests for adding them to the common playlist of the playback/playlist component 11. With the help of the user interface components 13, 52, it is also possible to configure specific modes like "always ask" / "always allow" presentation requests from all or from one or more specific media source devices 20, 30 or to start/stop the delegation of the control of the media player device 10 to a delegation device 50.

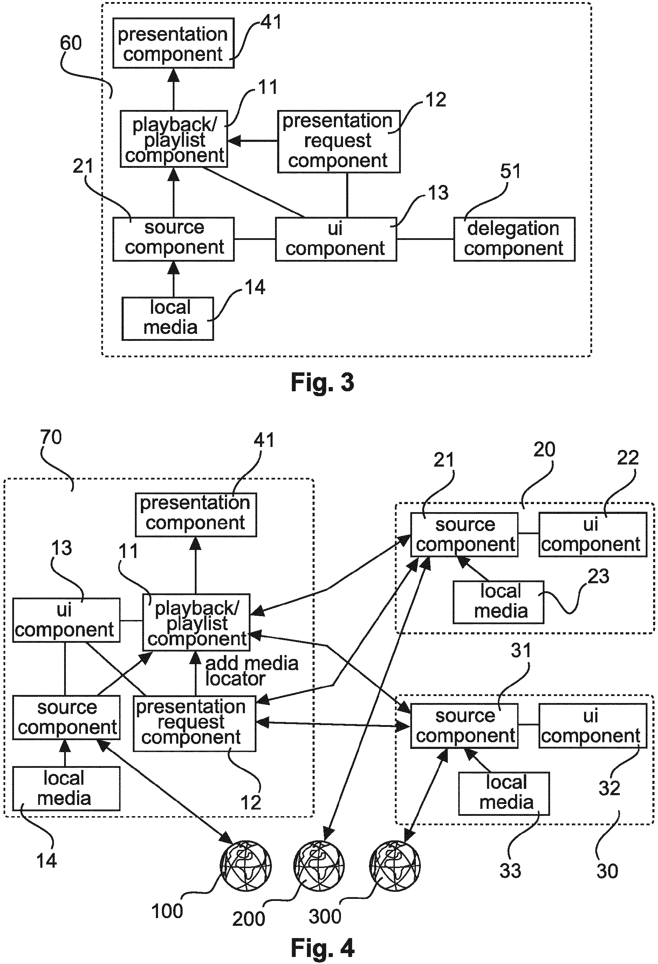

**Fig. 3** shows a further embodiment of the invention. The capabilities of media player device 10, presentation device 40, the media source device 20, 30, and the delegation device 50 can be combined into one media device 60, the block diagram of which is illustrated in Fig. 3. This is typically the case if the invention will be implemented with software means e.g. in the form of a smart phone app which may be downloaded from an app market place like Google Play Store or App Store for the iOS system from Apple. The app can be configured and thus can be used either as a media source device 20, 30, media player device 10 or delegation device 50. Therefore, at the beginning of the joint media consumption session the group of persons has to agree on one device to be the media player device 10 and otpionally another device to be the delegation device 50. The remaining devices will be configured to be media source devices 20, 30.

**Fig. 4** shows another embodiment of the invention. Here, the smart phone 10 will also be used for presenting music titles, e.g. via the integrated loudspeakers or a connected soundbar. Therefore, the smart phone 70 comprises the presentation component 41. In addition, the smart phone 70 has recorded in its local media storage 14 a plurality of music titles owned by the smart phone user. The owner of smart phone 70 therefore can define a playlist first, before accepting presentation requests from the other smart phones 20, 30. The source component 15 in smart phone 70 does not need to stream the music file to the playback/playlist component 11 with HTTP streaming, since the complete file is locally available in the local media storage 14. The playback component will take it from there in the usual way when playing back music titles. If the owner of smart phone 70 also adds music titles to the common playlist which are stored on an associated cloud storage 100, that data will likewise be downloaded immediately after adding to the playlist in the same way as explained in connection with the description of Fig. 1.

If a media source device (20, 30) leaves the network (e.g. a person leaves the group) all media stream locations originating from this media source device (20, 30) still stored in the playlist of the media player device (10, 70) are removed from the playlist. For this purpose the media player device (10, 70) needs to monitor which media source devices (20, 30) are connected to the WLAN. If one of the media source devices (20, 30) disconnects from the WLAN, the media player device (10, 70) will remove all media titles originating from the media source device (20, 30) which has left the WLAN network from the common playlist.

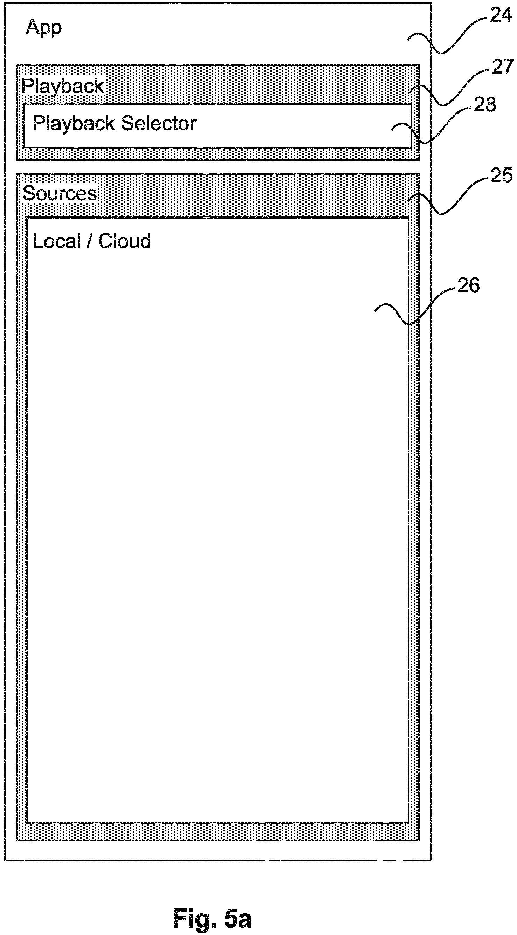

The format of a graphical user interface GUI for the media devices in different category are shown in Figs. 5a to 5e. The GUI will be implemented as part of an application program, e.g. typical smart phone app as explained above. **Fig. 5a** shows an example of a GUI for a smart phone app configured in the form of a media source device 20, 30. The app 24 shown on screen comprises a window 25 for the media source selection. In this window all the media titles stored in the local storage 23, 33 or in the cloud storage 200, 300 are selectable. By clicking on the selected media title in window 25, the title will be listed on the playback window 26. When the user has made up his choice, by pressing the OK button after exiting the media source selection window 25 a presentation request for the titles listed in field 28 of the playback window 27 will be generated.

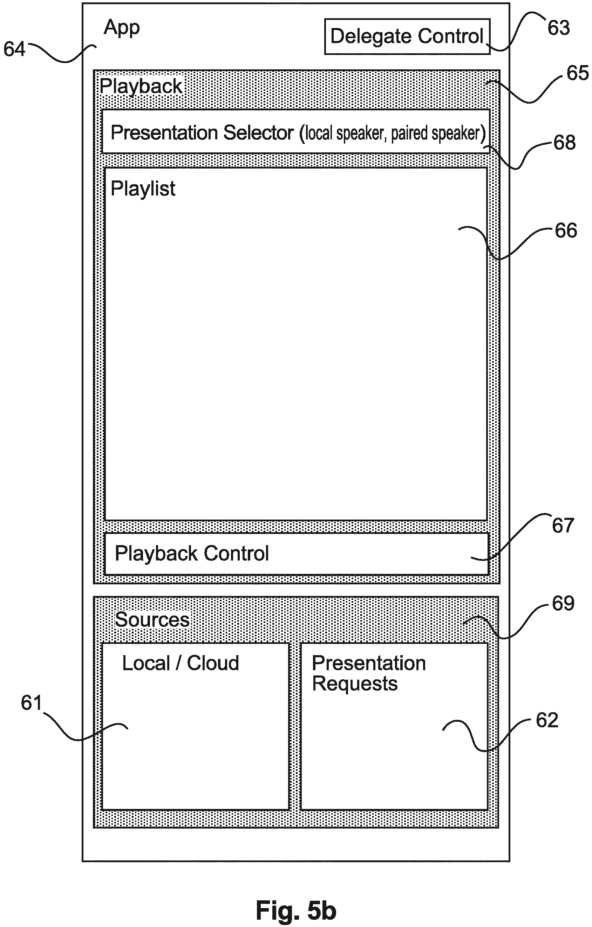

**Fig. 5b** shows an example of a GUI for a smart phone app configured in the form of a combined media source, media presentation and media playback and media delegation device 60 in which the delegation functionality is disabled. The app 64 shown on screen comprises a playback window 65 with a field 66 for showing the common playlist of the playback functionality of the combined device. A field 67 for the playback control is shown. In this field typical playback control buttons, e.g., Play, Stop, Pause, Title jump forward and Title jump backward are illustrated, e.g. with pictograms. Source window 69 comprises two fields. In field 61 all the media titles stored in the local storage 14 or in the cloud storage 100 are selectable. By clicking on the selected media title in field 61, the title will be highlighted. When the user has made up his choice, by pressing the OK button after exiting the media source selection field 61 the selected titles will be added to the playlist field 66. In field 62 the presentation request received from other media source devices 20, 30 will be listed. By selecting them with cursor and pressing the OK button, the corresponding presentation request will be approved. A corresponding acknowledge message will be sent back to the media source device 20, 30 from which the request has been received. With button 63 the delegation control functionality can be activated. If the button 63 is pressed, a listing of the stations in the network will show up, which have a delegation module activated. The user then can select one of the listed stations and thus determine to which station the playlist management is delegated. In field 68 the user can select to which set of loudspeakers the audio signal shall be output. The choice is between local speakers with which the smart phone 70 is equipped or with which smart 70 is paired (e.g. via Bluetooth or WiFi).

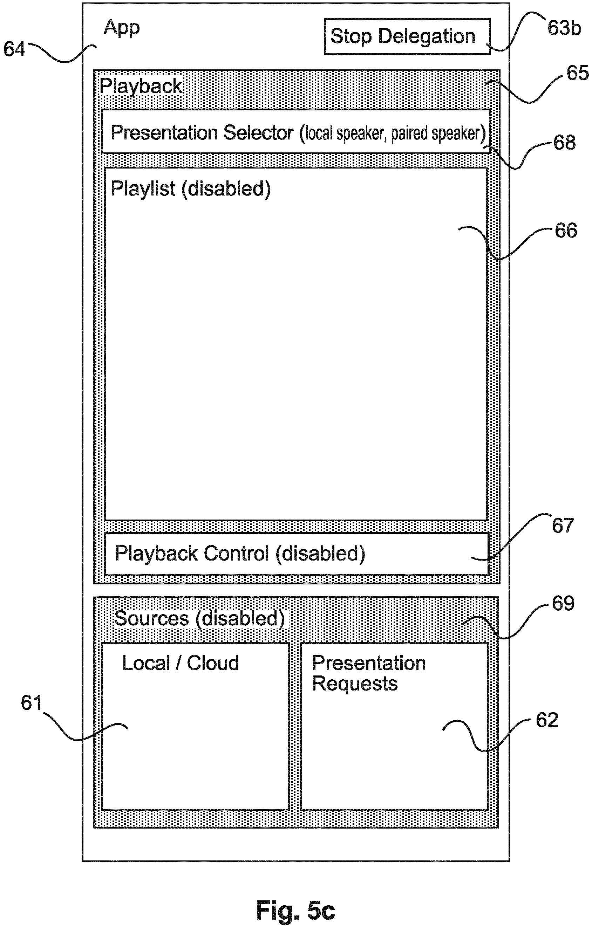

**Fig. 5c** shows an example of a GUI for a smart phone app configured in the form of a combined media source, media presentation and media playback and media delegation device 60 in which the delegation functionality is enabled. The GUI depicted in Fig. 5c has basically the same form of Fig. 5b. However, the fields 66, 67, 61 and 62 will be greyed-out. This fields will show up in the GUI of the smart phone to which the playlist management functionality has been delegated. The user therefore only has the possibility to select the loudspeakers for audio output and to stop the delegation via stop delegation button 63b.

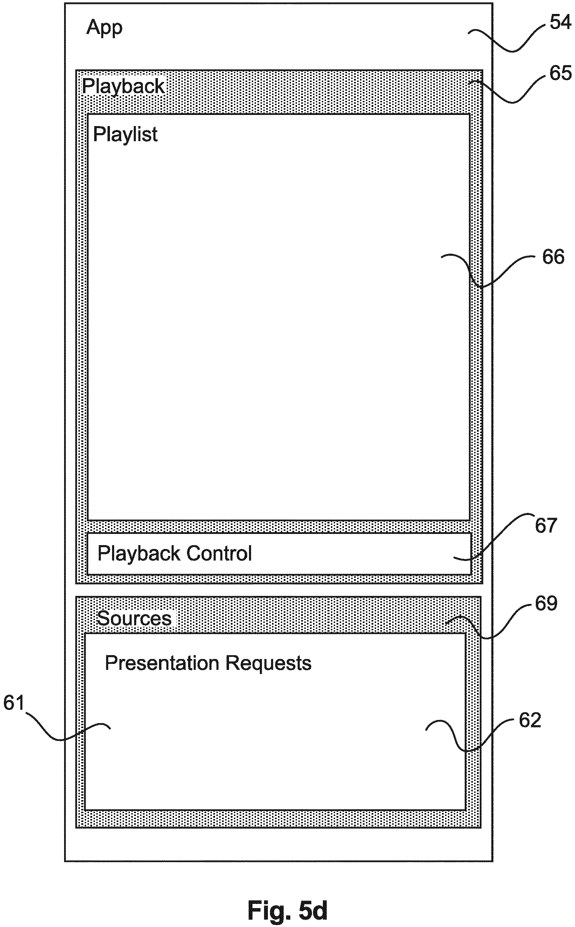

**Fig. 5d** shows an example of a GUI for a smart phone app configured in the form of a media delegation device 50. Like reference numbers assign the same components as depicted in Fig. 5b and Fig. 5c.

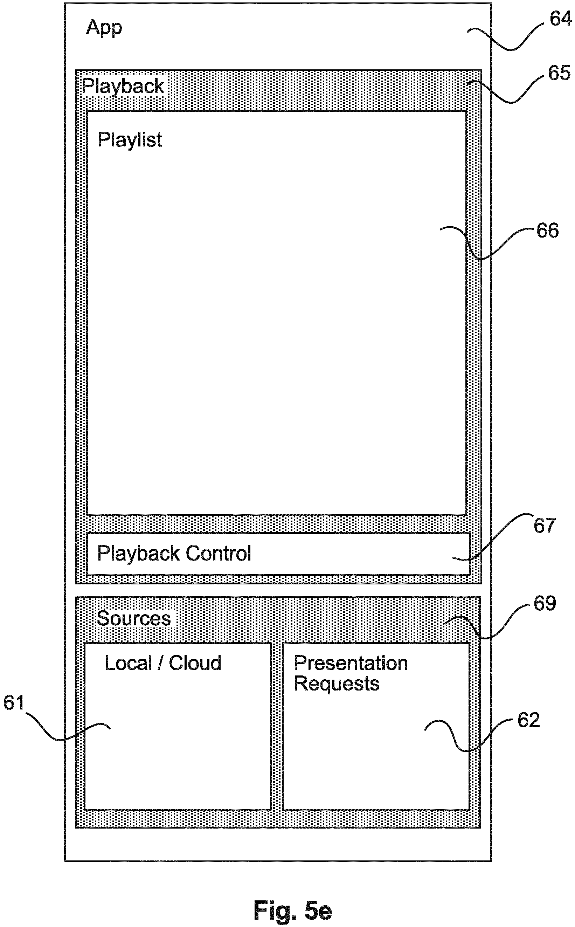

**Fig. 5e** shows an example of a GUI for a smart phone app configured in the form of a combined media source and media delegation device. Like reference numbers assign the same components as depicted in Fig. 5b and Fig. 5c.

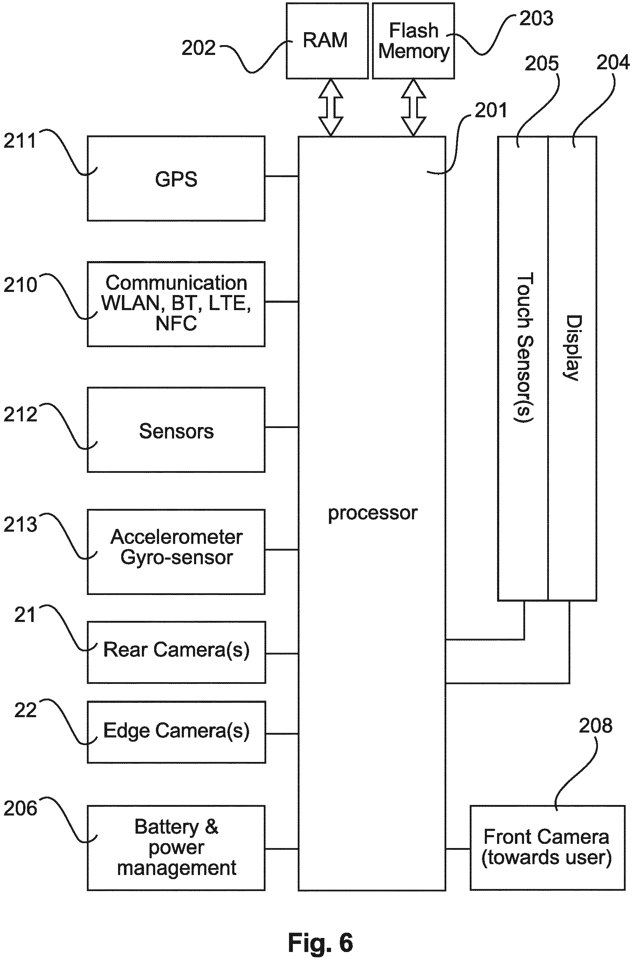

The typical hardware components of a configurable smart phone 60 are depicted in **Fig. 6****.** This includes processor 201, memory 202 and 203, display panel 204, touch-sensor 205, sensors 212, and 213, GPS receiver 211, cameras 208, and 207, power-management circuit 206 and communication interfaces 210.

The software according to the disclosure is stored in the FLASH-Memory 203 and running on the processor 201 by use of the RAM 202.

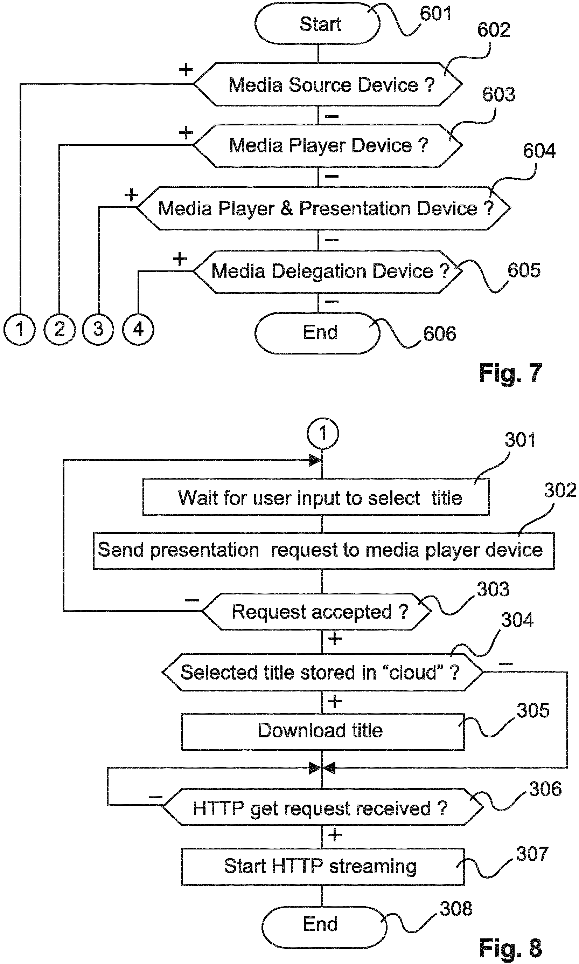

The software implementation for a media device 60 according to the disclosure is depicted in the flowchart of **Fig. 7****.** The application can be configured in the media player device mode, media player & presentation device mode, media source device mode or media delegation device mode either by a set preference or a user input as explained before. The program starts in step 601. In branching step 602 it is checked, if the media device will be configured in the media source device mode. Of course, a corresponding user input needs to be awaited, here. If yes, the media device will be configured in the media source device mode and the program proceeds to label 1. If not, the program continues with branching step 603. In branching step 603 it is checked, if the media device will be configured in the media player device mode. If yes, the media device will be configured in the media player device mode and the program proceeds to label 2. If not, the program continues with branching step 604. In branching step 604 it is checked, if the media device will be configured in the media player & presentation device mode. If yes, the media device will be configured in the media player & presentation device mode and the program proceeds to label 3. If not, the program continues with branching step 605. In branching step 605 it is checked, if the media device will be configured in the media delegation device mode. If yes, the media device will be configured in the media delegation device mode and the program proceeds to label 4. If not, this program then ends in step 606.

The flowchart for the program part indicated with label 1 is depicted in **Fig. 8****.** Following the start at label 1, the program waits for a user input to select a title in step 301. When such user input is made, the media source device 30 sends a presentation request to the media player device 10 in step 302. In branching step 303 it is checked, if the acceptance of the presentation request has been received back from the media player device 10. If not, the progrma returns back to step 301. If yes, it is checked with branching step 304 if the title identified in the presentation request is stored in a cloud storage device. This can be done by evaluating the URL information about the title identified in the presentation request. If not, the follwing step 305 is jumped over. If yes, the program downloads the identified title from the cloud storage 300 in step 305. With the follwing branching step 306 it is checked if an HTTP Get request has been received back from the media player device 10. If not, the program waits for the HTTP Get request in a loop. If yes, HTTP streaming of the selected title is performed in step 307. After that, the program ends in step 308.

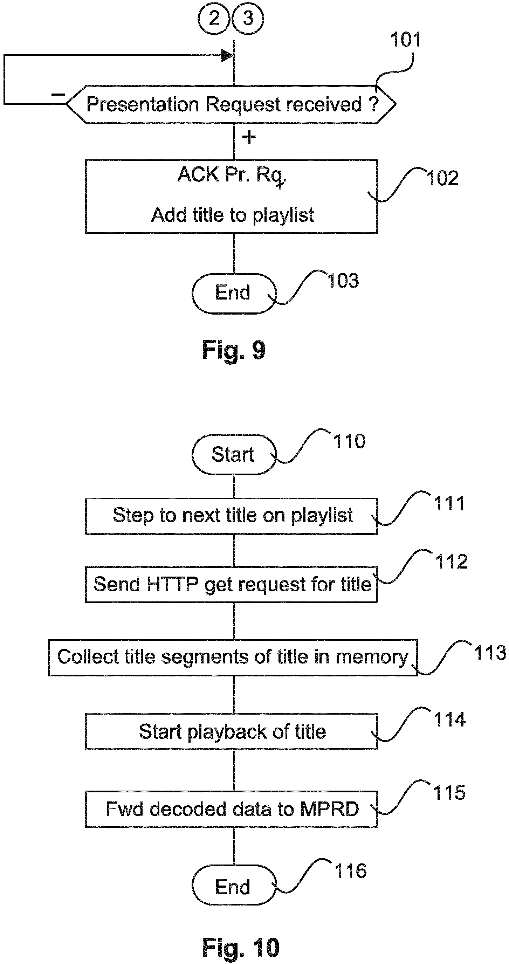

**Fig. 9** shows the flowchart for a 1^{st} part of a program which is executed by the media player device 10 or the media player & presentation device 70. The start of this program part is marked with label 2 and label 3. In branching step 101 it is checked if a presentation request has been received from a media source device 20, 30. If yes, the media player device 10 or media player & presentation device 70 acknowledges the presentation request in step 102 after the smart phone owner has accepted the title for adding to the playlist. If not, the program branches back to label 2 and label 3. Next, the title will be added to the common playlist in step 102. This part of program is ended in step 103.

**Fig. 10** shows a flowchart of a program part which is executed in the media player device 10 shown in Fig. 1 and Fig. 4. This progam part starts in step 110. In step 111, the player selects the next title on the common playlist for playback. In step 112 an HTTP Get request is send to the media source device from where the title was proposed for the playlist. In step 113 the media player device 10 collects all the file segments returning back with HTTP streaming in memory. The playback of the title starts in step 114. Here, playback starts when enough segments have been received such that the decoding buffer is sufficiently filled. In step 115 the decoded data is forwarded to the media presentation device 40 via cable connection or wirelessly with the help of WLAN, Bluetooth or another wireless communication technology. This part of the program ends in step 116. For transporting the decoded content to the presentation device in compressed form, the Airplay protocol from Apple may be used. According to that protocol the Apple Lossless audio coding method will be used. To the alternative, the Bluetooth A2DP protocol with SBC coding or aptX coding could be used. The SBC and aptX coding techniques however are not lossless coding methods.

In another embodiment an improved buffer arrangement could be implemented. In the improved buffer arrangement the buffer will load parts of a title in advance. So when the current played title is near the end, the first part of the successive title in playlist will be loaded in buffer before the following title will actually be played. This prevents the occurrence of gaps when playing successive titles from the playlist. In other words this solution is of advantage for a seamless playing back experience.

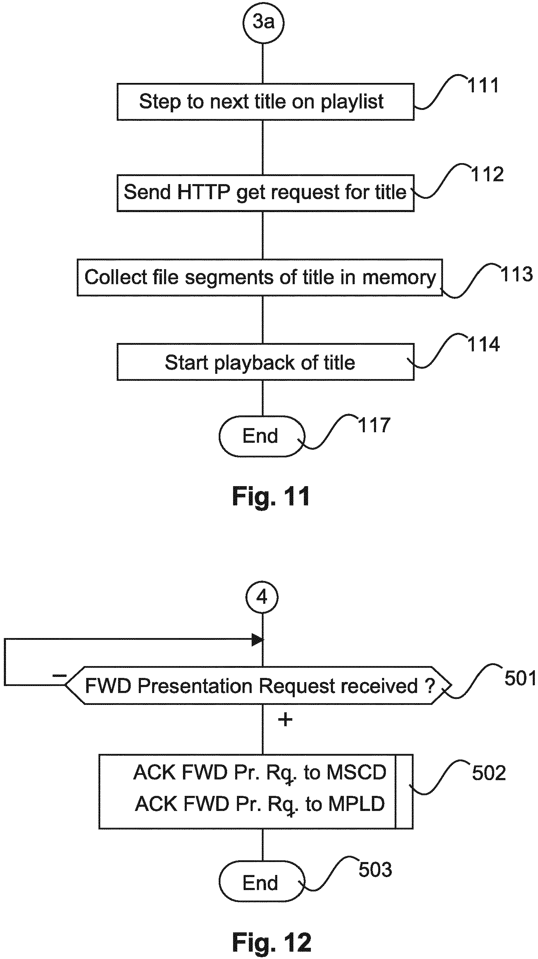

**Fig. 11** shows a flowchart of a program part which is executed in the media player device 70 shown in Fig. 4. The program part comprises the same program steps 111, 112, 113, and 114 as in Fig. 10. The difference is that the presentation will be performed with the media player device 70 itself. Therefore, step 115 from Fig. 10 is not performed. This part of the program ends in step 117.

**Fig. 12** shows a flowchart for a part of a program that will be executed in the delegation device 50 of Fig. 3. In branching step 501 it is checked whether or not a forwarded presentation request has been received from the media player device 10. If not, the program waits for this request to be received in a loop. If yes, after user input who validates the request, in step 502 the media delegation device 50 acknowledges the receipt of presentation request to the media source device 20, 30 on behalf of the media player device 10. Also, it acknowledges the receipt of the presentation request to the media player device 10. The program ends in step 503.

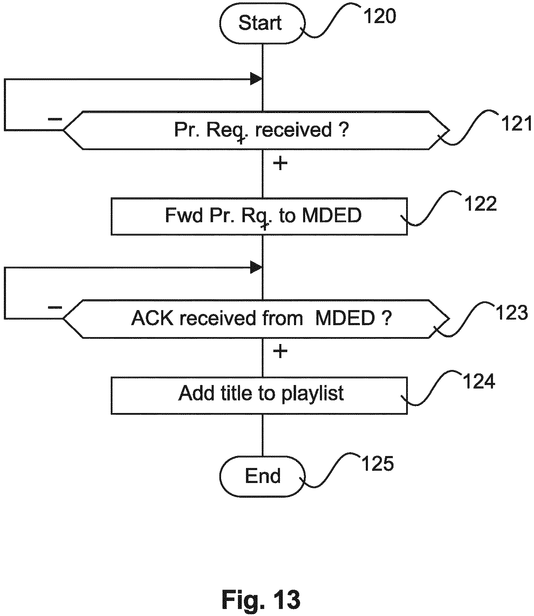

Next, the flow chart in **Fig. 13** is briefly explained. This flow chart is for a program that is executed by the media player device 10 of Fig. 3. The program start is indicated with reference number 120. In checking step 121 it is checked if a presentation request has been received from a media source device 20, 30. In step 122 the media player device 10 forwards the presentation request to the media delegation device 50. In step 123 it is checked if an acknowledge message has been received back from the media delegation device 50 for the presentation request that has been forwarded. If not, the program loops back to branching step 123. If yes, the title proposed in the presentation request message will be added to the playlist in the media player device 10 in step 124. The program ends in step 125.

The embodiments of the disclosure have been described with the example of music titles as media titles. Media titles however can be other titles, too, such as video titles, ebook titles, game titles, text titles, presentation titles, picture titles, or the like. For presentation of such titles a display needs to be used which can be external or internal to the media player device 10, 70. Of course, display here means any form of a display panel, CRT, Projection Display, LCD, OLED, PDP, E-Ink, Quantum Dot or the like even if it is in the form of a head-up display or data glasses.

The embodiments of the disclosure have further been described based on the example that a group of people are jointly consuming media titles where all people in the group have smart phones. The disclosure however is not limited to using smart phones. More generally, different types of mobile devices may be used in the group of people. In general the principles of the invention can be applied to any portable handheld device. Typical examples are a mobile phone, in particular smart phone, a tablet computer, a notebook computer, an eBook reader, a smart watch, a navigation system, etc.!

There is one distinct alternative embodiment with regard to the embodiment described in connection with Fig. 1. When adding a title from the cloud storage to the common playlist, the title will be added to the playlist with indication that the title is stored in cloud storage 200, 300 of owner of smart phone 20, 30. Then the title will not be downloaded immediately after adding to the playlist. When it is time to playback this title, smart phone 10 will send a HTTP Get request to the smart phone 20, 30 with the same type of information as indicated in the example above. The URL information will be coded in the temp-id. It is smart phone 20, 30 which makes the translation of the temp-id to the URL on local storage 23, 33 or cloud storage 200, 300. The smart phone 20, 30 in response will send the HTTP Get request to the cloud storage 200, 300 with the right URL information for that title. The data which is received back will be passed on to the smart phone 10 just in the same way as if the title would be stored locally on smart phone 20, 30, thereby implementing a pass through mode on smart phone 20, 30.

Further options concern the configuration of the smart phones 10, 20, 30, 50, 60, 70. These options concern the modification of the program depicted in Fig. 7: One possibility is to activate the media source device automatically, if there is a local or cloud storage service is found. In a similar way, the media player service part could be automatically activated, if an internal or external presentation service is selected. Activating the media player service guarantees that the media source devices will find the media player device to which they can send their presentation requests. To the alternative the activation of the media player service can happen by user input. The media delegation device part could always be activated, so that the control can be delegated from media player device to a media delegation device.

The disclosure is not restricted to the exemplary embodiments described here. There is scope for many different adaptations and developments which are also considered to belong to the disclosure.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device, an alert-output-device/communication device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

## Claims

1. Method for playing back a plurality of media titles, wherein a playlist is maintained on a media player device (10, 70), **characterized in that** a presentation request is sent to the media player device (10, 70) from a media source device (20, 30) specifying a media title which is located on the media source device (20, 30) or located on a server (100, 200, 300) which can be accessed by the media source device (20, 30) via a communication network, further **characterized in that** the media player device (10, 70) adds the media title specified in the presentation request to the playlist of the media player device (10, 70).

2. Method according to claim 1, wherein the presentation request contains the URL information for the media title identified in the presentation request.

3. Method according to claim 1 or 2, wherein the media source device (20, 30) upon receiving a presentation request grant message back from the media player device (10, 70), starts downloading the file of the media title that has been added to the playlist from the server (100, 200, 300).

4. Method according to one of the previous claims, wherein for playback of the media title that has been added to the playlist on the media player device (10, 70), the media player device (10, 70) sends an access request to the media source device (20, 30), where in response to the access request the media source device (20, 30) starts streaming of the requested media title to the media player device (10, 70) .

5. Method according to one of the previous claims, wherein the access request corresponds to an HTTP Get request identifying the file name and location of the media title based on the URL information of the media title to which access is requested, and wherein the media source device (20, 30) performs streaming of the media title to the media player device (10, 70) with a streaming protocol.

6. Method according to claim 5, wherein the streaming protocol is one of HTTP streaming, RTP streaming or HTTP chunked transfer encoding.

7. Method according to one of the previous claims, wherein for playback the media player device (10, 70) decodes the media file which is located on the media player device (10, 70) or the segments of the media file received during streaming of the media title and either forwards the decoded content to a media presentation device (40) for presentation or presents the decoded content with its own or connected presentation means.

8. Method according to one of the previous claims, wherein the media player device (10, 70) when receiving a presentation request from a media source device (20, 30) forwards the presentation request to a media delegation device (50) and the media delegation device (50) processes the presentation request and upon acceptance of the presentation request sends a playlist updating message to the media player device (10, 70) which in response to the receipt of the media update message adds the media title to the playlist maintained in the media player device (10, 70).

9. Media source device (20, 30) adapted to perfom the method steps of sending a presentation request according to claim 1 or 2, the method step of claim 3, and the step of streaming the requested media title according to one of claims 4, 5 and 6.

10. Media player device (10, 70) adapted to perform the method steps of one of adding the media title to the playlist according to claim 1, sending a presentation request grant message according to claim 3, sending an access request message according to claim 4 or 5, the method steps of claim 7, and the steps of forwarding a presentation request and adding the media title to the playlist of claim 8.

11. Media delegation device (50) adapted to perform the method steps of processing the forwarded presentation request message and sending a playlist updating message to the media player device according to claim 8.

12. Configurable adapted computer program comprising computer-executable instructions that when run in a computer system cause the computer system to perform the method steps of a media source device (20, 30), media player device (10, 70) or media delegation device (50) as listed in one of claims 9 to 11.
